# EUROPEAN PATENT APPLICATION

(11) **EP 1 880 647 A1**
(43) Date of publication of application: **23.01.2008**
(21) Application number: 07012894.7
(22) Date of filing: 02.07.2007
(51) Int. Cl.: A47J 43/07

(54) **Food preparation arrangements**

(30) Priority: 19.07.2006 GB 0614285
(71) Applicant: Kenwood Limited, Havant, Hampshire PO9 2NH (GB)
(72) Inventor: Goodrick-Meech, Christina, Hampshire P09 2NH (GB); Clark, Simon, Hampshire P09 2NH (GB)
(74) Representative: Marsh, Robin Geoffrey

(57) **Abstract**

A food preparation arrangement is provided with a receptacle (50), such as a bowl, for ingredients to be mixed or otherwise processed by means of a kitchen appliance (10); and with sensors (60) for sensing the weight of the receptacle (50) and its ingredients and generating electrical signals indicative of the sensed weight. The electrical signals, or signals derived from them, are sent to a display (70, 80, 90, 100), remote from the receptacle (50), for displaying ingredient weight information derived from said output signals. The sensors (60) may be integrated into the receptacle (50), and the display (70, 80, 90, 100) may be carried by the appliance (10) or provided separately of both the receptacle (50) and the kitchen appliance (10). The signals sent to the display (70, 80, 90, 100) may be transmitted by means of infra-red (IR) or radio-frequency (RF) signalling components (65, 66).

## Description

This invention relates to food preparation arrangements, and it relates more particularly to such arrangements for increasing the usefulness of kitchen appliances, such as stand mixers and food processors, by providing them with additional capabilities.

Kitchen appliances such as those mentioned above are well known and established as useful and reasonably priced appliances with a broad range of capabilities. Because, however, of design constraints, some of which have their origins in the pricing structures which have become established for such appliances, it is generally the case that, when such appliances are used to prepare ingredients for a recipe, other kitchen equipment, such as weighing scales, has to be utilised along with them. This tends to cause clutter on the work-top as a user prepares the ingredients, and it is necessary to provide sufficient space to accommodate the individual footprints of the various appliances and equipments.

One embodiment of the invention relates to arrangements including stand mixers, by which is meant the kind of kitchen machine in which a mixing bowl is supported on a pedestal which also supports an electric motor and a drive system including a drive outlet, overhead of the bowl, which permits a planetary mixing action to be imparted to tools suspended into the bowl from the overhead drive outlet.

Stand mixers, such as the Kenwood Chef kitchen machine, are well known and have been well established in use for many years. Over the years, mixers of this kind have been adapted and developed so as to perform an ever broadening range of functions, and many such devices incorporate, for example, a plurality of drive outlets running at different speeds and with differing torque characteristics enabling them to perform a wide spread of operations. The drive outlets are typically disposed at respective locations of the stand mixer and some at least of the locations present support surfaces to receive mixing or blending vessels appropriate in design and configuration to the intended function associated with the respective drive outlet.

Recently, such mixers have been further developed to incorporate heaters and thus to provide a cooking and/or warming facility, whereby the single kitchen machine can effectively perform a full range of functions ranging from the preparation of ingredients to the cooking or heating of the prepared ingredients.

Proposals have also been made to provide stand mixers with the capability to weigh ingredients without resorting to the use of separate weighing scales, but such proposals have focussed principally upon the use of means capable of weighing the entire machine. It will be appreciated that such arrangements have drawbacks in that, whilst the intention is to weigh the relatively light ingredients to be prepared and/or cooked, the weighing means has to be capable of registering the weight of the relatively heavy machine together with that of a mixing bowl and its ingredients, and subtracting the machine's weight from the total.

Such arrangements are relatively inefficient and moreover tend to be somewhat inaccurate as regards measuring the weight of the relatively lightweight ingredients.

It is an object of this invention to overcome or at least reduce such problems.

The invention is also applicable to food processors, in which respect prior proposals, such as that described in WO 02/43542 A2, have been made for temporarily standing additional equipment, such as weighing scales, on unused platforms of such appliances, but the present invention aims to incorporate functionality of weighing scales into a food preparation appliance; to achieve such incorporation economically and to provide reliable operation of the combined appliances at reasonable cost.

According to the invention there is provided a food preparation arrangement comprising a receptacle for ingredients to be mixed or otherwise processed by means of a kitchen appliance; the arrangement further comprising sensing means for sensing the weight of the receptacle and the ingredients and for generating electrical signals indicative of the weight sensed thereby, and signal transmission means for receiving said electrical signals and for conveying output signals related to said electrical signals to display means, remote from the receptacle, for displaying ingredient weight information derived from said output signals.

In one preferred embodiment of the invention, the receptacle comprises a bowl in which the ingredients are to be mixed, or otherwise processed, in which case the sensing means is preferably integrated into the bowl.

In another preferred embodiment, the receptacle, the sensing means and the signal transmission means are associated with a kitchen scale usable separately from the kitchen appliance.

In some embodiments, the display means is carried by and/or integrated into the kitchen appliance.

In other embodiments, the display means is provided separately of both the receptacle and the kitchen appliance. Such a display means may comprise a free-standing device or a device provided with means for adherence or attachment to a kitchen surface, such as a cupboard door or a wall. In one particularly preferred embodiment, the device is provided with magnetic means permitting its attachment to any suitable surface, such as a refrigerator door.

It will be appreciated that the display device may provide additional functionality beyond simply displaying weight information when desired; for example, the display may act as a digital clock, showing the time of day when not required to display the weights of ingredients.

Alternatively or in addition, such a multi-purpose display may be conditioned to respond to signals transmitted by other kitchen equipment, for example it may be conditioned to receive alert signals transmitted from a water-filter jug or a batch filtration unit and intended to remind the user to change a water filter cartridge.

The signal transmission system may comprise any convenient contactless system utilising for example infra-red (IR) or radio-frequency (RF) signalling techniques and technology.

Preferably said display means includes an LCD display. In some preferred embodiments, the LCD display may also be used to display (simultaneously with weight information or otherwise) data, other than weight information, associated with the operation and/or usage of the kitchen appliance and/or one or more other appliances used in the kitchen. Such a display may, for example, be conditioned to respond to a warning signal generated by a suitable electronic circuit associated with a water filter jug to indicate a need to change the water filter.

It is particularly preferred that the weighing device incorporates load cells comprising strategically deployed strain gauges connected into a bridge circuit configured to provide said output signals.

Conveniently, the sensing means may be encapsulated into the material of the bowl, and further all or part of the signal transmission means, including an antenna device, may be so encapsulated. By this means the bowl may be used, washed and otherwise treated in the same way as a conventional food-mixer bowl.

In some embodiments it is preferred to locate the all or most components of the signal transmission means closely adjacent the sensing means, in or near the base of the bowl. However, in other embodiments it is preferred to dispose at least an antenna component of the transmission means at a higher location, for example at or near the rim of the bowl, in order to ease communication with the display device.

Certain embodiments of the invention are intended to provide a weighing function only when the kitchen appliance is not being used to actively mix ingredients. In such circumstances, it is preferred that the display is blanked, or provided with a suitable message or graphic, when the mixing function is active.

In order that the invention may be clearly understood and readily carried into effect, certain embodiments thereof will now be described, by way of example only, with reference to the accompanying drawings, of which:
Figures 1, 2a and 3 show, in perspective, in front elevation and in side elevation respectively, a stand mixer configured for use in an arrangement in accordance with one example of the invention;
Figure 2b shows, from an underside perspective, a bowl configured for use with the stand mixer shown in Figures 1, 2a and 3;
Figure 4 shows a side elevation of the bowl shown in Figure 2b; and
Figures 5a, 5b and 5c show respective display devices usable in arrangements according to various embodiments of the invention.

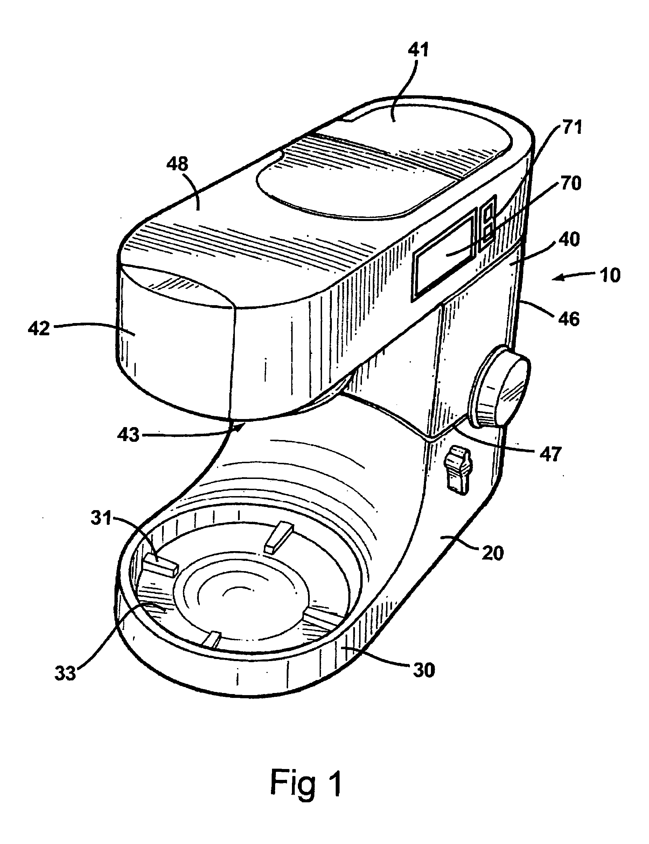

Referring now to Figures 1 to 3, there is shown, purely by way of example, a stand mixer 10 which can advantageously host an arrangement in accordance with an embodiment of the invention, and which comprises a pedestal 20 supporting a bowl platform 30 and a housing 40. The housing 40 encloses, in conventional fashion, an electric drive motor (not shown) and gearing (not shown) which conveys the motive power supplied by the motor to a plurality of drive outlets to which various tools can be attached to perform a wide variety of tasks in the kitchen.

In this particular example, there is provided a high-speed blender drive outlet behind covers 41, a slow-speed mincer drive outlet behind cover 42 and a planetary drive, intended for food mixing, overhead of the bowl location, at 43, although it will readily be appreciated that more, fewer and/or different drive outlets can be provided in accordance with desired functionality of the stand mixer.

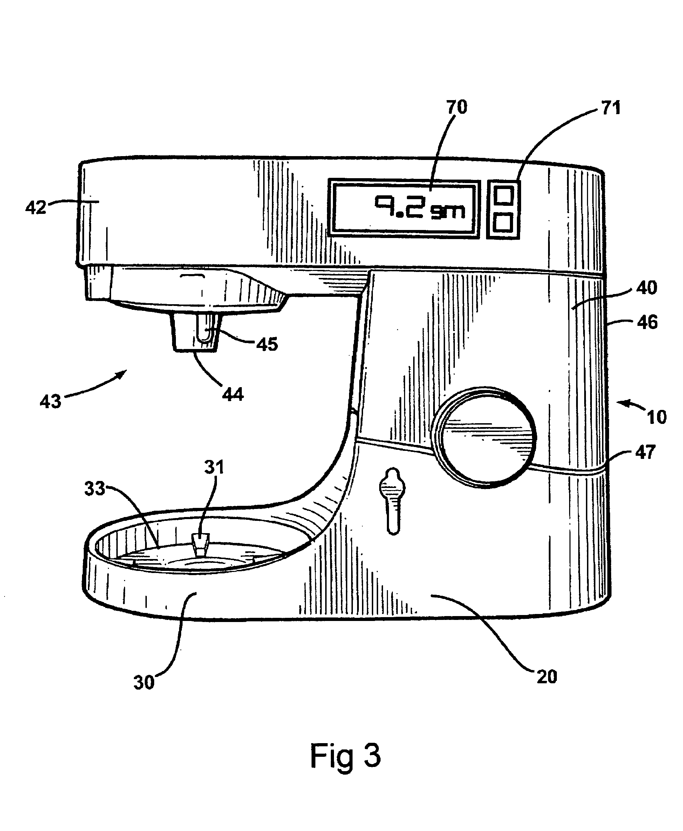

A shanked mixing tool, attached as is conventional, to a socket (shown at 44 in Figure 3) of the outlet 43, will depend in use into a mixing bowl placed on the bowl platform 30, and is configured to rotate about both the axis of the socket 44 and the central axis 45 (see Figure 3) of the outlet 43, thus performing a planetary mixing action. The necessary relationships between the relative shapes and dimensions of the bowl and the mixing tool to ensure thorough and repeatable mixing of ingredients are well known and established in use over many years.

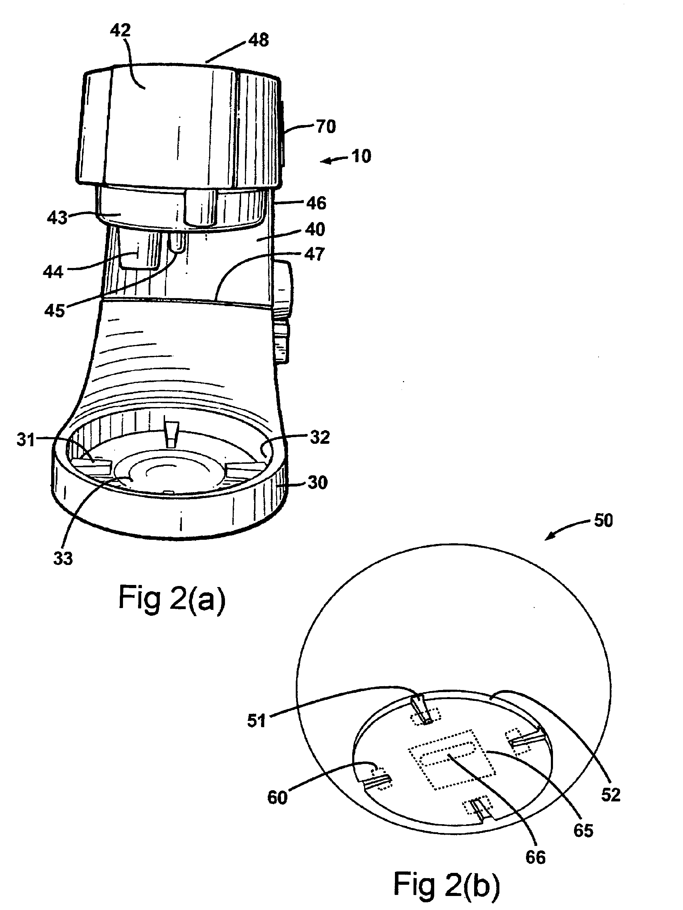

As shown, the stand mixer 10 is, in this example, provided with a series 31 of upstands arranged on a circular track within a recess 33 provided in the bowl platform 30, and these upstands co-operate with similarly shaped notches 51, formed in the base of a bowl such as that shown at 50 in Figure 2(b), to form a latching system which ensures firm and ready location of the bowl 50 on its platform 30 whilst allowing the bowl to be free-standing for purposes to be described later. Other latching systems can alternatively be provided, however, if preferred.

The upright part 46 of the housing 40 is configured with a break line 47, and a suitable mechanism to permit the top part 48 of the stand mixer to be hinged away from the platform 30 end of the pedestal part 20, in order to facilitate the insertion and removal of the mixing tools and the bowl 50.

A first example of an arrangement in accordance with the present invention provides an arrangement whereby, when it is intended to use the stand mixer 10 to perform a mixing operation in a bowl 50 placed on the bowl platform 30, a shanked mixing tool, attached as is conventional, to a socket (shown at 44 in Figure 3) of the outlet 43, will depend in use into the mixing bowl 50 which, in accordance with this embodiment of the invention, incorporates, integrated into the base thereof, the elements (schematically indicated at 60) of an electronic weighing scale, together with electrical circuitry (schematically indicated at 65) including an antenna 66 whereby electrical signals indicative of weights measured by the scale 60 can be transmitted to a display device 70 remote from the bowl 50.

The display 70 comprises, in this example, a liquid crystal display (LCD) by means of which weight information derived from the scale 50 can be displayed. The display 70 may be integrated into the stand mixer 10, as shown in Figures 2 and 3, in which case it may be hingedly mounted, or otherwise movable relative to the casing 40 in order to present a convenient viewing angle for the user.

In other embodiments, the display 70 may be detachable from the stand mixer, or it may indeed be entirely separate therefrom. Such a separate display means may comprise a free-standing device, or one provided with means for adherence or attachment to a kitchen surface, such as a cupboard door or a wall. In one particularly preferred embodiment, the device is provided with one or more magnets permitting its attachment to any suitable metallic surface, such as a refrigerator door.

The display device 70 may provide additional functionality beyond simply displaying weight information when desired; for example, the display may act as a digital clock, showing the time of day when not required to display the weights of ingredients. Alternatively or in addition, such a multi-purpose display may be conditioned to respond to signals transmitted by other kitchen equipment; for example it may be conditioned to receive alert signals transmitted from a water-filter jug or a batch water filtration unit and intended to remind the user to change a water filter cartridge.

The signal transmission system may comprise any convenient contactless system utilising for example infra-red (IR) or radio-frequency (RF) signalling techniques and technology and/or Bluetooth protocols.

In those embodiments where the display device 70 is integrated into the stand mixer 10, the stand mixer 10 may further be provided with a receiver, for example in the form of an antenna formed on or coupled to a radio-frequency (RF) transmissive window (not shown) in the casing 40, for RF control signals from a remote control handset (not shown) which permits the stand mixer to be instructed to perform, or be conditioned to perform, some at least of its functions remotely. In other embodiments, remote control signals for the stand mixer are input by means of a suitable device into the mains wiring and sent to the stand mixer over that wiring.

As mentioned previously, arrangements in accordance with other embodiments of the invention can be hosted by a food processor, as opposed to a stand mixer.

Conventional food processors include an electric motor and a drive system disposed and arranged to provide rotational drive outputs for use with a blender section and a food processor section which typically are operated respectively at a relatively high speed from a relatively high platform and at a relatively low speed from a low platform. Some newer food processors, however, utilise a single operating platform which supports coaxial drives for blending and processing respectively. The invention applies to both types of food processor.

The following description is applicable to all embodiments of the invention, whether hosted by stand mixer such as 10 or a food processor, or by some other appliance.

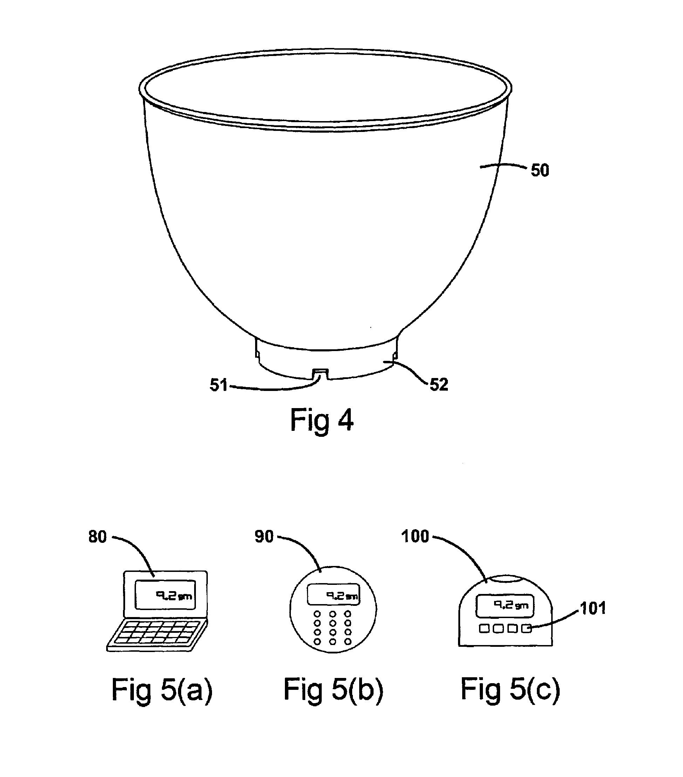

Referring now to Figures 2b and 4, the mixing bowl 50 comprises a base 52 which is formed with the above-mentioned plurality of notches 51 designed to co-operate with the upstands 31 formed in the well 33 to locate the bowl on the base 30 and to prevent it from moving when the planetary mixer 10 is operating. In this example of the invention, the notches are somewhat shallower than their counterpart upstands 31, in order that the bowl 50 is effectively supported on the upstands 31 within the well 33 for purposes which will now become clear.

In accordance with this example of the invention, the bowl 50 incorporates sensing means 60, such as load cells utilising strategically deployed strain gauges (shown schematically in dashed lines); one adjacent each notch 51, for sensing the weight of the bowl and the ingredients and for generating electrical signals indicative of the weight sensed thereby. The bowl also incorporates signal processing and transmission components, including electronic circuitry, schematically shown at 65, for receiving the electrical signals from the sensing means and processing them as necessary and an antenna 66, coupled to the circuitry 65, to transmit output signals conveying the weight information to a display means such as 70, remote from the receptacle, for displaying ingredient weight information derived from the output signals communicated thereto.

In one embodiment, the display means comprises a display 70 carried by and/or integrated into the host kitchen appliance.

In other embodiments, the display means is provided separately of both the receptacle and the kitchen appliance, and comprises a free-standing device 80. In a preferred embodiment, such a device 80 incorporates a calculator 81 which a user can employ to make calculations related to the cooking operation or, of course, for entirely separate purposes.

Alternatively, the display means may comprise a device 90 provided with means for adherence or attachment to a kitchen surface, such as a cupboard door or a wall. In one particularly preferred embodiment, the device 90 is provided with a magnet, permitting its attachment to any suitable metallic surface, such as a refrigerator door.

Further alternatively, the display means may comprise a device such as a kitchen timer 100 which can be employed as a conventional timer or configured to display weight information transmitted thereto from the bowl 50, depending on the actuation of a mode selector key 101.

Conveniently, the sensing means 60 may be encapsulated into the material of the bowl 50, and further all or part of the signal transmission means 65, including antenna device 66, may be so encapsulated. By this means the bowl may be used, washed and otherwise treated in the same way as a conventional food-mixer bowl.

In some embodiments it is preferred to locate all or most components of the signal transmission circuitry 65, 66 closely adjacent the sensing means 60, in or near the base of the bowl 50. However, in other embodiments it is preferred to dispose at least the antenna component 66 of the transmission circuitry at a higher location, for example at or near the rim of the bowl, in order to ease communication with the display device 70, 80, 90 or 100.

It will be appreciated that the display device 70, 80, 90 or 100 may provide additional functionality if desired. For example, the display may act as a digital clock, showing the time of day when not required to display the weights of ingredients. Alternatively, or in addition, such a multi-purpose display may be conditioned to respond to signals transmitted by other kitchen equipment. For example, it may be conditioned to receive alert signals transmitted from a water-filter jug or a batch water filtration unit and intended to remind the user to change a water filter cartridge.

The signal transmission system may comprise any convenient contactless system utilising for example infra-red (IR) or radio-frequency (RF) signalling techniques and technology and may conform to Bluetooth protocols.

Preferably the display means 70, 80, 90 or 100 includes an LCD display.

Certain embodiments of the invention are intended to provide a weighing function only when the kitchen appliance is not being used to actively mix ingredients. In such circumstances, it is preferred that the display is blanked, or provided with a suitable message or graphic, when the mixing function is active.

The weight information provided by the weighing scales may be processed, or pre-processed, by components included in the circuitry 65. Alternatively, weight information may be supplied as "raw" data which is processed as necessary in a microprocessor (not shown) housed within the casing 40 of the stand mixer 10, or in a microprocessor (not shown) incorporated into the housing of a free-standing or otherwise mounted display such as 80, 90 or 100.

It will be appreciated that software typically controls the various sampling and processing operations, and that such software is readily available, or can readily be adapted or devised, for use in arrangements intended to function in accordance with any chosen operational configuration.

In alternative embodiments of the invention to those described above and shown in the drawings, the receptacle comprises that of a kitchen scale usable separately from the kitchen appliance 10, and the sensing means such as 60 and the signal processing and transmission components, such as 65 and 66, are incorporated into the scale, so as to permit the weight information to be transmitted to and displayed separately, as before, upon a display such as 70 provided on the appliance 10 or upon devices such as 80, 90 or 100.

## Claims

1. A food preparation arrangement comprising a receptacle (50) for ingredients to be mixed or otherwise processed by means of a kitchen appliance (10); the arrangement being **characterised by** the provision of sensing means (60) for sensing the weight of the receptacle (50) and the ingredients and for generating electrical signals indicative of the weight sensed thereby, and signal transmission means (65, 66) for receiving said electrical signals and for conveying output signals related to said electrical signals to display means (70, 80, 90, 100), remote from the receptacle (50), for displaying ingredient weight information derived from said output signals.

2. An arrangement according to claim 1, wherein the receptacle comprises a bowl (50) in which the ingredients are to be mixed, or otherwise processed.

3. An arrangement according to claim 2, wherein the sensing means (60) is integrated into the bowl (50).

4. An arrangement according to claim 1, wherein the receptacle (50), the sensing means (60) and the signal transmission means (65, 66) are associated with a kitchen scale usable separately from the kitchen appliance.

5. An arrangement according to any preceding claim, wherein the display means (70) is carried by and/or integrated into the kitchen appliance (10).

6. An arrangement according to any of claims 1 to 4, wherein the display means (80, 90, 100) is provided separately of both the receptacle (50) and the kitchen appliance (10).

7. An arrangement according to claim 6, wherein said display means (80, 90, 100) comprises a free-standing device.

8. An arrangement according to claim 6, wherein said display means (80, 90, 100) comprises a device provided with means for adherence or attachment to a kitchen surface.

9. An arrangement according to claim 8, wherein said device is provided with magnetic means permitting its attachment to any suitable surface, such as a refrigerator door.

10. An arrangement according to any preceding claim, wherein said display means (70, 80, 90, 100) is conditioned to provide additional functionality beyond the display of weight information when desired.

11. An arrangement according to claim 10, wherein said display means (70, 80, 90, 100) is also conditioned to act as a digital clock.

12. An arrangement according to claim 10 or claim 11, wherein said display means (70, 80, 90, 100) is conditioned to respond to signals transmitted by other kitchen equipment.

13. An arrangement according to any preceding claim, wherein said signal transmission means (65, 66) comprises a contactless system utilising one of infra-red (IR) or radio-frequency (RF) signalling techniques and technology.

14. An arrangement according to any preceding claim, wherein said display means (70, 80, 90, 100) includes an LCD display.

15. An arrangement according to any preceding claim, wherein said sensing means (60) incorporates load cells comprising strategically deployed strain gauges connected into a bridge circuit configured to provide said electrical signals indicative of weight.

16. An arrangement according to any preceding claim, wherein, the sensing means (60) is encapsulated into the material of the receptacle (50).

17. An arrangement according to any preceding claim, wherein all or part of the signal transmission means (65, 66), including an antenna device (66), is encapsulated into the material of the receptacle (50).

18. An arrangement according to any preceding claim, wherein all or most components of the signal transmission means (65, 66) are disposed closely adjacent the sensing means (60) and in or near the base of the receptacle (50).

19. An arrangement according to any of claims 1 to 17, wherein at least an antenna component (66) of the transmission means (65, 66) is located at or near the rim of the receptacle (50), in order to ease communication with the display device (70, 80, 90, 100).
